# EUROPÄISCHE PATENTSCHRIFT

(11) **EP 3 744 898 B1**
(45) Veröffentlichungstag und Bekanntmachung des Hinweises auf die Patenterteilung: **04.08.2021**
(21) Anmeldenummer: 20175543.6
(22) Anmeldetag: 19.05.2020
(51) Int. Cl.: E01C 23/088, F16H 57/04, F16N 39/02

(54) **BESTIMMUNGSGEMÄSS WECHSELBARES BODENBEARBEITUNGSMASCHINEN-FRÄSAGGREGAT MIT KÜHLERLÜFTER ZUR KÜHLUNG EINES GESCHLOSSENEN BETRIEBSMITTELKREISLAUFS**
SOIL WORKING MACHINE MILLING UNIT WHICH CAN BE CHANGED AS INTENDED WITH COOLING FAN FOR COOLING A CLOSED OPERATING MEDIUM CIRCUIT
GROUPE DE FRAISAGE DE MACHINE DE TRAITEMENT DU SOL INTERCHANGEABLE DE MANIÈRE CONFORME POURVU D'AÉRATEUR DE RADIATEUR PERMETTANT DE REFROIDIR UN CIRCUIT DE CONSOMMABLE FERMÉ

(30) Priorität: 27.05.2019 DE 102019114184
(43) Veröffentlichungstag der Anmeldung: 02.12.2020
(73) Patentinhaber: Wirtgen GmbH, 53578 Windhagen (DE)
(72) Erfinder: STINNER, Tobias, 57645 Nister (DE); BERNING, Christian, 53909 Zülpich (DE); BÖTZIUS, Sebastian, 53721 Siegburg (DE)
(74) Vertreter: Ruttensperger Lachnit Trossin Gomoll

(56) Entgegenhaltungen:
- DE-A1-102012 010 947
- DE-A1-102016 004 271

## Beschreibung

Die vorliegende Erfindung betrifft ein Fräsaggregat für eine Bodenbearbeitungsmaschine, wie etwa eine Straßenfräsmaschine, einen Recycler oder einen Surface-Miner, wobei das Fräsaggregat eine Fräswalze und einen die Fräswalze um eine Fräswalzenachse drehbar lagernden Fräswalzenkasten umfasst, wobei der Fräswalzenkasten die Fräswalze von mehreren Seiten umgibt, wobei das Fräsaggregat einen geschlossenen Betriebsmittelkreislauf aufweist, welcher eine Betriebsmittelpumpe umfasst, die dazu ausgebildet ist, das Betriebsmittel zur Zirkulation im Betriebsmittelkreislauf anzutreiben, wobei der Betriebsmittelkreislauf einen während einer Zirkulationsströmung des Betriebsmittels vom Betriebsmittel durchströmten Wärmetauscher umfasst, wobei der Wärmetauscher am Fräswalzenkasten angeordnet ist.

Die vorliegende Erfindung betrifft dabei insbesondere ein wechselbares Fräsaggregat, welches dazu ausgebildet ist, für die Dauer einer oder mehrerer vorgesehener Fräsbearbeitungen mit einem Maschinenrahmen einer Bodenbearbeitungsmaschine ausreichend fest, aber lösbar verbunden zu sein. Eine lösbare Verbindung im Sinne der vorliegenden Anmeldung ist dabei eine Verbindung, welche zerstörungsfrei gelöst werden kann. Aufgrund der für eine Fräsbearbeitung ausreichend festen, jedoch dennoch bestimmungsgemäß lösbaren Verbindung des Fräsaggregats mit einem Maschinenrahmen einer Bodenbearbeitungsmaschine kann das Fräsaggregat erforderlichenfalls als Baugruppe von dem Maschinenrahmen der Bodenbearbeitungsmaschine entfernt werden, etwa wenn die Bodenbearbeitungsmaschine für eine andere Fräsaufgabe umgerüstet werden soll, die mit dem aktuell mit dem Maschinenrahmen verbundenen Fräsaggregat nicht erledigt werden kann oder wenn das Fräsaggregat beim Transport zur Einhaltung von zulässigen Maßen und Gewichten von der Maschine getrennt werden muss.

Das Fräsaggregat einer Bodenbearbeitungsmaschine ist üblicherweise mit Betriebsmitteln versorgt, beispielsweise mit flüssigen Schmiermitteln, wie Schmierölen, oder mit Hydraulikölen oder mit Kühlflüssigkeiten. Hierzu zählt insbesondere das Getriebeöl eines Fräswalzengetriebes, welches die Drehzahl einer Antriebswelle eines Antriebsmotors der Bodenbearbeitungsmaschine zu einer für einen Fräsbetrieb brauchbaren Drehzahl der Fräswalze überträgt. Im Betrieb erwärmt sich das Getriebeöl. Die Betriebswärme des Getriebeöls muss daher ab Erreichen einer bestimmten Temperatur abgeführt werden, um das Fräsaggregat in einem betriebsbereiten Zustand zu halten und eine Überhitzung des Getriebeöls zu vermeiden.

Aus der DE 10 2016 004 271 A1 ist ein gattungsgemäßes Fräsaggregat bekannt, das einen geschlossenen Getriebeölkreislauf aufweist. Vorteilhaft daran ist, dass beim Lösen und Entfernen des Fräsaggregats vom Maschinenrahmen einer Bodenbearbeitungsmaschine der Getriebeölkreislauf nicht geöffnet werden muss, sodass die Integrität des Getriebeöls und die am Fräsaggregat vorhandene Getriebeölmenge durch ein Entfernen des Fräsaggregats vom Maschinenrahmen nicht beeinflusst werden.

Zur Kühlung des Getriebeöls des geschlossenen Getriebeölkreislaufs ist in diesem ein Wärmetauscher angeordnet, welcher von einer Kühlflüssigkeit durchströmt wird, die entweder die Brennkraftmaschine oder Hydrauliköl der Bodenbearbeitungsmaschine kühlt. Daher stellt das bekannte Fräsaggregat nur einen Teil eines Kühlmittelkreislaufs bereit, welcher bei Anordnung des Fräsaggregats am Maschinenrahmen der Bodenbearbeitungsmaschine mit einem weiteren maschinenseitigen Teil des Kühlmittelkreislaufs zu einem vollständigen Kühlmittelkreislauf ergänzt werden muss. Dies macht nicht nur zusätzliche Montagearbeit erforderlich, sondern begründet auch das Risiko eines Kühlmittelverlustes oder/und einer Kühlmittelverschmutzung während der Montage oder/und während der Zeit der Trennung des Fräsaggregats von der übrigen Bodenbearbeitungsmaschine.

Aus der DE10 2012 010 947 A1 ist eine Fräswalze einer Bodenbearbeitungsmaschine bekannt, welche in einem radial inneren Bereich eines Fräswalzenrohrs, das auf seiner Außenseite Fräswerkzeuge trägt, einen Lüfterrotor aufweist. Der Lüfterrotor wird von der Antriebswelle der Fräswalze angetrieben, wobei der Lüfterrotor durch ein zwischengeschaltetes Getriebe mit einer sowohl von der Antriebswelle als auch von der Fräswalze verschiedenen Drehzahl betrieben werden kann. Ebenso kann der Lüfterrotor durch eine Kupplung von der Antriebswelle getrennt werden, sodass der Lüfterrotor unabhängig von einer Drehung der Antriebswelle stillgelegt werden kann.

Der Lüfterrotor im radial inneren Bereich des Fräswalzenrohrs kann Luft zu einer Getriebegehäusewand eines Fräswalzengetriebes fördern und so der Getriebegehäusewand konvektiv Wärme entziehen.

Zum einen ist die Getriebegehäusewand aufgrund der erheblichen mechanischen Anforderungen an eine Fräswalze massiv und dick ausgebildet, sodass durch das bloße Anblasen einer Wandfläche kein großer konvektiver Kühleffekt zu erzielen ist.

Zum anderen befindet sich besonders die Fräswalze während des Fräsbetriebs in einer Atmosphäre, die nicht nur durch gerade abgetragenes Fräsgut außergewöhnlich stark verschmutzt ist, sondern die aufgrund der kinetischen Energie des gerade abgetragenen Fräsguts auch stark abrasiv wirkt. Der bekannte Lüfterrotor ist daher erheblichem mechanischem Verschleiß ausgesetzt.

Der vorliegenden Erfindung liegt daher die technische Aufgabe zugrunde, unter Beibehaltung des aus dem Stand der Technik bereits bekannten geschlossenen Betriebsmittelkreislaufs für eine effektive Kühlung des in dem Betriebsmittelkreislauf zirkulierenden Betriebsmittels zu sorgen, und dabei die im Stand der Technik bekannten oben genannten Nachteile zu vermeiden.

Die vorliegende Erfindung löst diese Aufgabe durch ein Fräsaggregat der eingangs genannten Art, bei welchem der Wärmetauscher zur Anströmung in einem offenen Kühlgasstrom durch ein vom Betriebsmittel gesondertes Kühlgas ausgebildet ist. Durch die Verwendung von Kühlgas zum konvektiven Wärmeaustausch mit dem Betriebsmittel am Wärmetauscher wird kein Kühlflüssigkeitskreislauf mit einer Schnittstelle zwischen Fräsaggregat und Maschinenrahmen der Bodenbearbeitungsmaschine benötigt. Durch Verwendung eines offenen Kühlgasstroms, also eines Kühlgasstroms, der in der Umgebungsatmosphäre beginnt oder/und endet, kann einerseits der bauliche Aufwand zur Führung des Kühlgasstroms gering gehalten oder sogar ganz vermieden werden. Andererseits ist ein Wärmeentzug am Kühlgas entbehrlich, wie er bei einem geschlossenen Kühlgaskreislauf erforderlich wäre.

Das Kühlgas für den offenen Kühlgasstrom kann einem an dem Fräsaggregat oder an der das Fräsaggregat tragenden übrigen Bodenbearbeitungsmaschine angeordneten Vorratsbehälter entnommen werden, in welchem Kühlgas komprimiert und bezüglich der Atmosphäre unter Überdruck stehend bereitgestellt ist. Der Vorteil dabei ist, dass das im Behälter komprimiert bereitgestellte Kühlgas vor Erreichen des Wärmetauschers in einem freien, also nur durch die Luft der Umgebungsatmosphäre strömenden Kühlgasstrahl auf Umgebungsdruck entspannt und dadurch erheblich abgekühlt werden kann. Die Kühlwirkung des derart durch den Wärmetauscher oder am Wärmetauscher vorbei strömenden Kühlgases kann so, verglichen mit Kühlgas auf Umgebungstemperatur, gesteigert werden. Hinsichtlich der Strömungsführung des Kühlgases reicht es aus, das Kühlgas vom Vorratsbehälter an den Wärmetauscher heranzuführen, etwa durch einen Kühlgaskanal, beispielsweise gebildet durch einen Kühlgasschlauch oder/und ein Kühlgasrohr.

Nachteilig ist jedoch, dass in dem Vorratsbehälter Kühlgas nur mengenmäßig begrenzt zur Verfügung steht und zusätzlich der Kühlgasstrom möglicherweise mengenmäßig von dem jeweiligen im Vorratsbehälter herrschenden Restgasdruck abhängt. Vorteilhaft ist daher ein Kühlerlüfter vorgesehen, welcher dazu ausgebildet und angeordnet, ist, das Kühlgas zur Anströmung des Wärmetauschers anzutreiben.

Der Kühlerlüfter kann an einem Maschinenrahmen der das Fräsaggregat mit dem Wärmetauscher tragenden Bodenbearbeitungsmaschine angeordnet sein und an diesem auch bei einem Entfernen des Fräsaggregats vom Maschinenrahmen verbleiben. Am Maschinenrahmen oder/und am Fräsaggregat können dann Strömungsleitflächen angeordnet sein, die vom Kühlerlüfter angetriebenes Kühlgas zum Wärmetauscher leiten.

Ein möglichst kurzer Abstand zwischen dem Kühlerlüfter und dem Wärmetauscher und damit ein möglichst kurzer Strömungsweg zwischen dem Kühlerlüfter und dem Wärmetauscher, welcher Strömungsleitflächen vollständig entbehrlich machen kann, wird gemäß einer bevorzugten Weiterbildung der vorliegenden Erfindung dadurch erhalten, dass der Kühlerlüfter am Fräsaggregat angeordnet ist und an diesem bei einem Entfernen des Fräsaggregats vom Maschinenrahmen verbleibt.

Durch den Kühlerlüfter kann jederzeit ausreichend konvektiver Gasstrom unabhängig von jedem anderen Betriebszustand des Fräsaggregats oder der Bodenbearbeitungsmaschine bereitgestellt werden. Zwar ist auch die Umgebung der Bodenbearbeitungsmaschine während des Fräsbetriebs durch aufgewirbelten Staub und dergleichen lokal unterschiedlich stark verschmutzt, jedoch ist am Fräswalzenkasten in der Regel der Grad an Verschmutzung wesentlich geringer als, wie aus der DE 10 2012 010 947 A1 bekannt, unmittelbar an der Fräswalze.

Der Fräswalzenkasten begrenzt einen Aufnahmeraum, in welchem die Fräswalze drehbar aufgenommen ist, bezogen auf die Fräswalzenachse axial wenigstens zu beiden Stirnseiten, auf der im Betrieb zum Maschinenrahmen hinweisenden Oberseite, sowie im Betrieb in und entgegen der zur Fräswalzenachse orthogonalen Arbeitsrichtung. Lediglich zu dem zu bearbeitenden Boden hin ist der Fräswalzenkasten offen, sodass ein Fräseingriff der Fräswalze mit dem zu bearbeitenden Boden möglich ist.

Eine oder beide Funktionskomponenten aus Wärmetauscher und Kühlerlüfter können unmittelbar an dem Fräswalzenkasten oder mittelbar unter Zwischenanordnung weiterer Bauteile am Fräswalzenkasten angeordnet sein.

Mit dem Begriff "Kühlerlüfter" ist dabei eine Vorrichtung bezeichnet, welche ein um eine Lüfterachse rotierbares Lüfterblatt, ein das Lüfterblatt rotierbar lagerndes Lüftergestell und einen das Lüfterblatt zur Rotation um die Lüfterachse antreibenden Lüftermotor aufweist. Das Lüfterblatt weist vorzugsweise mehrere Schaufeln auf, welche vorzugsweise winkelmäßig äquidistant um die Lüfterachse herum angeordnet sind. Mit dem Begriff "Betriebsmittelpumpe" ist jede Art von Fördereinrichtung bezeichnet, welche das Betriebsmittel zur Zirkulation im Betriebsmittelkreislauf antreibt.

Der vom Kühlerlüfter erzeugte offene Kühlgasstrom kann im Bereich des Kühlerlüfters oder/und im Bereich des Wärmetauschers durch eine Einfassung oder durch einen oder mehrere Kanäle geführt sein. Außerhalb von Kühlerlüfter und Wärmetauscher strömt das Kühlgas bevorzugt frei.

Bevorzugt ist das Kühlgas Luft, sodass es der das Fräsaggregat umgebenden Atmosphäre als quasi-unerschöpflichem Kühlgasvorrat entnommen, in konvektivem Wärmeübertragungskontakt am Wärmetauscher vorbei gefördert und nach dem Vorbeigang am Wärmetauscher mit dann gegenüber dem Wärmeinhalt stromaufwärts des Wärmetauschers abweichendem Wärmeinhalt in die das Fräsaggregat umgebende Atmosphäre geblasen werden kann. Da sich die Bodenbearbeitungsmaschine während eines Fräsbetriebs in Arbeitsrichtung vorwärts bewegt, bewegt sich die Bodenbearbeitungsmaschine durch die sie umgebende Atmosphäre. Es ist daher nicht zu befürchten, dass rund um den Wärmetauscher eine Blase mit sich aufgrund des Wärmeübergangs am Wärmetauscher zunehmend erwärmender Umgebungsluft entsteht, die die Kühlwirkung des Wärmetauschers allmählich verringert.

Um zu vermeiden, dass durch den gegenüber dem Stand der Technik zusätzlich am Fräswalzenkasten angeordneten Wärmetauscher oder/und Kühlerlüfter die Außenabmessungen des Fräswalzenkastens dauerhaft unvorteilhaft vergrößert werden, ist gemäß einer vorteilhaften Weiterbildung der vorliegenden Erfindung vorgesehen, dass der Wärmetauscher oder/und ein ein Lüfterblatt rotierbar lagerndes Lüftergestell des Kühlerlüfters relativ zum Fräswalzenkasten beweglich am Fräswalzenkasten angeordnet ist bzw. sind. Hierzu ist lediglich zu berücksichtigen, dass die Betriebsmittelleitungen, die das Betriebsmittel dem Wärmetauscher zuführen und von dem Wärmetauscher abführen, ausreichend lang und flexibel ausgebildet werden, dass diese Betriebsmittelleitungen eine Bewegung des Wärmetauschers relativ zum Fräswalzenkasten mit ausführen können, ohne vorher vom Wärmetauscher getrennt werden zu müssen.

Da es stets Aufgabe des Kühlerlüfters ist, Kühlgas am Wärmetauscher vorbei bzw. durch den Wärmetauscher hindurch zu fördern, können zur Erleichterung von Fertigung und Montage der Wärmetauscher und der Kühlerlüfter als gemeinsam vormontierte Baugruppe ausgebildet sein. Beispielsweise kann der Kühlerlüfter mit einer Seite des Wärmetauschers, und zu Reparaturzwecken bevorzugt lösbar, verbunden sein. Alternativ, wenngleich in einer verschlechterten Ausführungsform, kann der Wärmetauscher, gegebenenfalls als vormontierte Baugruppe gemeinsam mit dem Kühlerlüfter, abnehmbar am Fräswalzenkasten vorgesehen sein. Bevorzugt ist dann der Wärmetauscher über sogenannte Schnellkupplungen mit den Betriebsmittel zu- und abführenden Leitungen verbunden, sodass der Wärmetauscher mit wenigen Handgriffen vom restlichen Betriebsmittelkreislauf getrennt werden kann.

Bevorzugt ist der Wärmetauscher ein Kreuzstrom-Wärmetauscher. So kann er eine große Wärmetauschfläche zwischen dem Betriebsmittel und dem Kühlgas bereitstellen, ohne hierfür selbst übermäßig große Abmessungen annehmen zu müssen. Beim Kreuzstrom-Wärmetauscher schließen die Strömungsrichtungen von Betriebsmittel und Kühlgas am Wärmetauscher miteinander einen Winkel ein, vorzugsweise einen rechten Winkel. Bevorzugt ist an der auf einer Seite vom Betriebsmittel und auf der entgegengesetzten Seite vom Kühlgas benetzten Wärmetauschfläche des Wärmetauschers die Abmessung des Wärmetauschers in Strömungsrichtung des Kühlgases kleiner als in Strömungsrichtung des Betriebsmittels. So kann ein flacher Wärmetauscher erhalten werden, der einfach an oder in eine Wandung des Fräswalzenkastens angebaut bzw. eingebaut werden kann.

Zusätzlich oder alternativ kann der Wärmetauscher ein Gegenstrom-Wärmetauscher sein. Beim Gegenstrom-Wärmetauscher sind die Strömungswege von Betriebsmittel und Kühlgas parallel, jedoch entgegengesetzt gerichtet. Gegenstrom-Wärmetauscher haben in der Regel eine größere Länge in Strömungsrichtung des Betriebsmittels als Kreuzstrom-Wärmetauscher, können jedoch schlanker gebaut werden.

Weiter zusätzlich oder alternativ kann der Wärmetauscher ein Gleichstrom-Wärmetauscher sein. Auch beim Gleichstrom-Wärmetauscher sind die Strömungswege von Betriebsmittel und Kühlgas parallel, jedoch gleich gerichtet. Auch der Gleichstrom-Wärmetauscher kann in schlanker Bauweise, d. h. radial zur Strömungsrichtung des Betriebsmittels im Wärmetauscher mit verhältnismäßig geringer Abmessung, jedoch in Strömungsrichtung mit verhältnismäßig großer Abmessung gebaut werden.

Der Wärmetauscher kann in einem Abschnitt die eine und in einem anderen Abschnitt wenigstens eine andere der oben genannten Bauformen aufweisen.

Zur möglichst effektiven Wärmeübertragung zwischen Betriebsmittel und Kühlgas an der Wärmetauschfläche weist der Wärmetauscher bevorzugt Kanäle auf, welche vom Kühlgas durchströmbar sind. Somit wird das Kühlgas vom Wärmetauscher geführt, während es an diesem vorbeiströmt bzw. diesen durchströmt.

Zur Vermeidung einer unnötig hohen Schmutzbelastung von Wärmetauscher oder/und Kühlerlüfter ist bzw. sind der Wärmetauscher oder/und der Kühlerlüfter bevorzugt auf der von der Fräswalze abgewandten Seite des Fräswalzenkastens angeordnet. Zusätzlich können Filtereinrichtungen vorgesehen sein.

Zur Sicherstellung einer einfachen Zugänglichkeit von Wärmetauscher oder/und Kühlerlüfter kann vorgesehen sein, dass der Wärmetauscher oder/und der Kühlerlüfter bezogen auf die Fräswalzenachse axial weiter von der Fräswalze entfernt angeordnet ist bzw. sind als eine den Fräswalzenkasten auf der Seite des Wärmetauschers axial begrenzende Seitenwand des Fräswalzenkastens. Die Seitenwand befindet sich dann axial zwischen Fräswalze einerseits und Wärmetauscher oder/und Kühlerlüfter andererseits. In diesem Fall kann der Wärmetauscher oder/und der Kühlerlüfter selbst dann ohne Weiteres zugänglich sein, wenn das Fräsaggregat mit einem Maschinenrahmen einer Bodenbearbeitungsmaschine fräsbereit verbunden ist.

Dann, wenn das Fräsaggregat betriebsbereit mit einem Maschinenrahmen einer Bodenbearbeitungsmaschine verbunden ist, ist die Fräswalze mit ihrem einen bezüglich der Fräswalzenachse axialen Längsende näher an der sogenannten Nullseite des Maschinenrahmens der Bodenbearbeitungsmaschine bzw. der Bodenbearbeitungsmaschine angeordnet als mit dem jeweils entgegengesetzten anderen axialen Längsende, das der sogenannten Maschinenseite des Maschinenrahmens bzw. der Bodenbearbeitungsmaschine axial näher liegt. Der Grund hierfür liegt in den Vorrichtungen zur Drehmomentübertragung vom Maschinenrahmen zur Fräswalze, wie etwa ein weiter unten erläuterter Transmissionsriemen, die nur auf der Maschinenseite vorgesehen sind, und dort die Einsehbarkeit des zu bearbeitenden Bodenabschnitts für den Maschinenführer verschlechtern. Auf der Nullseite der das Fräsaggregat tragenden Bodenbearbeitungsmaschine kann die Bodenbearbeitungsmaschine aufgrund der dort im Vergleich zur Maschinenseite besseren Einsehbarkeit des Bearbeitungsbereichs möglichst genau an einen vorgegebenen Bearbeitungsrand des Bodens herangefahren werden. Da das Fräsaggregat stets in derselben Orientierung mit dem Maschinenrahmen einer Bodenbearbeitungsmaschine gekoppelt wird und in der Regel auch das Fräsaggregat auf der Maschinenseite dauerhaft angebaute Komponenten des Fräswalzenantriebs aufweist, wie etwa eine Abtriebsrolle des Transmissionsriemens, kann die stets auf der Maschinenseite der Bodenbearbeitungsmaschine gelegene Stirnseite des Fräsaggregats als Maschinenseite des Fräsaggregats bezeichnet werden und die entgegengesetzte Seite als Nullseite des Fräsaggregats.

Bevorzugt ist bzw. sind der Wärmetauscher oder/und der Kühlerlüfter näher bei der Maschinenseite als bei der Nullseite angeordnet, da an der Maschinenseite des Fräsaggregats ein höherer Bedarf an sich im Betrieb erwärmenden Betriebsmitteln besteht, sodass bei Anordnung von Wärmetauscher oder/und Kühlerlüfter näher bei der Maschinenseite kürzere Betriebsmittelleitungen zum Wärmetauscher hin und von diesem Weg verwendet werden können als bei dessen Anordnung näher bei der Nullseite. Dies erleichtert außerdem die Verlegung der Betriebsmittelleitungen am Fräsaggregat.

Über die abschnittsweise Einhüllung der Fräswalze durch den Fräswalzenkasten hinaus kann am Fräswalzenkasten wenigstens ein Teil eines Vorrichtungsgehäuses angeordnet sein, in welchem im fräsbereiten Zustand des Fräsaggregats eine von der Fräswalze verschiedene Vorrichtung aufgenommen ist. Vorzugsweise ist bzw. sind dann der Wärmetauscher oder/und der Kühlerlüfter an oder in einer Wand des Vorrichtungsgehäuses angeordnet, um zum einen durch das Vorrichtungsgehäuse ohnehin vorhandenen Bauraum zur Unterbringung von Wärmetauscher oder/und Kühlerlüfter zu nutzen und um zum anderen den Wärmetauscher oder/und den Kühlerlüfter stärker vor äußeren Einflüssen, insbesondere vor Schmutz, zu schützen.

Bevorzugt ist auf der Saugseite des Kühlerlüfters ein Staubfilter angeordnet, durch den hindurch der Kühlerlüfter das Kühlgas, insbesondere Umgebungsluft, ansaugt.

Das erwähnte Vorrichtungsgehäuse am Fräswalzenkasten kann beispielsweise ein Transmissionsgehäuse sein, in welchem im fräsbereiten Zustand des Fräsaggregats eine Transmissionsvorrichtung angeordnet ist, welche ein Antriebsdrehmoment zur Fräswalze überträgt. Üblicherweise wird an Bodenbearbeitungsmaschinen eine Brennkraftmaschine als zentrale Kraftquelle der Bodenbearbeitungsmaschine genutzt. Von der Brennkraftmaschine wird, gegebenenfalls unter Zwischenanordnung einer oder mehrerer Hydraulikpumpen, die Kraft für den Vortrieb der Bodenbearbeitungsmaschine ebenso abgeleitet wie das Drehmoment für den Drehantrieb der Fräswalze. Bevorzugt überträgt die Transmissionsvorrichtung daher Antriebsdrehmoment von der übrigen Bodenbearbeitungsmaschine zur Fräswalze. Das Vorrichtungsgehäuse ist daher bevorzugt nur teilweise am Fräsaggregat bzw. am Fräswalzenkasten ausgebildet. Zu einem weiteren Teil ist das Vorrichtungsgehäuse am Maschinenrahmen der das Fräsaggregat aufnehmenden Bodenbearbeitungsmaschine angeordnet, sodass sich der aggregatsseitige Gehäuseteil und der bearbeitungsmaschinenseitige Gehäuseteil nach Anordnung des Fräsaggregats am Maschinenrahmen der Bodenbearbeitungsmaschine zu einem vollständigen Vorrichtungsgehäuse ergänzen.

Grundsätzlich kann die Transmissionsvorrichtung eine beliebige Vorrichtung zur Übertragung von Drehmoment zur Fräswalze sein. Bevorzugt weist die Transmissionsvorrichtung einen Transmissionsriemen auf. Der Transmissionsriemen kann nach Entfernen des Fräsaggregats von der übrigen Bodenbearbeitungsmaschine entweder am Fräsaggregat oder an der Bodenbearbeitungsmaschine verbleiben. Ein Transmissionsriemen gestattet eine Übertragung eines großen Drehmoments über eine verhältnismäßig große Entfernung hinweg bei gleichzeitig großer Lagetoleranz von Antriebs- und Abtriebswelle. Außerdem ist ein Transmissionsriemen, verglichen mit anderen Getrieben, sehr unanfällig gegen Schmutz.

Um sicherzustellen, dass der Wärmetauscher oder/und der Kühlerlüfter am Vorrichtungsgehäuse den Betrieb des Transmissionsriemens nicht stören, kann vorgesehen sein, dass der Wärmetauscher oder/und der Kühlerlüfter an einer Wand des Vorrichtungsgehäuses angeordnet ist bzw. sind, welche einer zwischen den äußeren Rändern des Transmissionsriemens gelegenen umlaufenden Riemenfläche gegenüberliegt. Da die beschriebene Riemenfläche eine verhältnismäßig große Oberfläche aufweist und außerdem umläuft und somit sich relativ zum gehäusefesten Wärmetauscher oder/und Kühlerlüfter bewegt, ist eine unerwünschte Erwärmung des Transmissionsriemens selbst dann nicht zu befürchten, wenn das Kühlgas nach Durchtritt durch den Wärmetauscher mit höherer Temperatur auf die Riemenfläche auftrifft.

Zwischen dem Transmissionsriemen und insbesondere der genannten Riemenfläche einerseits und dem Wärmetauscher oder/und dem Kühlerlüfter andererseits kann gemäß einer vorteilhaften Weiterbildung der Erfindung eine Trennvorrichtung, etwa ein Schutzblech oder dergleichen, vorgesehen sein, welche den Transmissionsriemen körperlich von dem Wärmetauscher oder/und dem Kühlerlüfter trennt. Dadurch sind der Wärmetauscher oder/und der Kühlerlüfter vor mechanischen Einflüssen des Transmissionsriemens und der Transmissionsriemen vor erwärmten Kühlgasströmen geschützt.

Grundsätzlich kann das Betriebsmittel ein beliebiges Fluid sein, auch Gas. Bevorzugt ist das Betriebsmittel eine Flüssigkeit. Das häufigste als Flüssigkeit am Fräsaggregat eingesetzte Betriebsmittel ist ein Öl. Das Öl kann ein Hydrauliköl zum Betrieb von hydraulischen Geräten, wie Kolben-Zylinder-Anordnungen oder/und hydraulischen Antrieben sein. Das Öl kann ein Schmieröl sein. Insbesondere kann das Öl ein sich während des Fräsbetriebs erwärmendes Getriebeöl eines im Fräsaggregat im Übertragungspfad des Antriebsdrehmoments zur Fräswalze angeordneten Fräswalzengetriebes sein.

Das Fräsaggregat ist bevorzugt ein Wechselfräsaggregat, welches bestimmungsgemäß lösbar mit dem Maschinenrahmen einer Bodenbearbeitungsmaschine mit ausreichender Sicherheit verbindbar ist.

Als Wechselfräsaggregat kann das Fräsaggregat eine mechanische Kopplungsbaugruppe zur wiederholt lösbaren mechanischen Kopplung mit einer mechanischen Kopplungsgegenbaugruppe an einem Maschinenrahmen einer Bodenbearbeitungsmaschine aufweisen. Die mechanische Kopplungsbaugruppe des Wechselfräsaggregats kann eine Durchgangsöffnung, insbesondere Durchgangsbohrung oder/und einen Verbindungsbolzen, insbesondere Schraubbolzen oder Gewindebolzen umfassen. Ebenso kann die Kopplungsgegenbaugruppe am Maschinenrahmen eine Durchgangsöffnung, insbesondere Durchgangsbohrung oder/und einen Verbindungsbolzen, insbesondere Schraubbolzen oder Gewindebolzen umfassen.

Die vorliegende Erfindung betrifft außerdem eine Bodenbearbeitungsmaschine, wie etwa Straßenfräsmaschine, Recycler oder Surface-Miner, mit einem Fräsaggregat, wie es oben beschrieben und weitergebildet ist. Aus den oben genannten Gründen umfasst die Bodenbearbeitungsmaschine einen Maschinenrahmen mit einer mechanischen Kopplungsgegenbaugruppe, welche ein schnelles Wechseln bzw. Austauschen von Wechselfräsaggregaten ermöglicht.

Die vorliegende Erfindung wird nachfolgend anhand der beiliegenden Zeichnungen näher erläutert werden. Es stellt dar:
- Figur 1: eine grobschematische Seitenansicht einer erfindungsgemäßen Ausführungsform einer Bodenbearbeitungsmaschine in Form einer Großfräse in einer Stellung für einen Abroll-Fahrbetrieb,
- Figur 2: eine schematische perspektivische Ansicht einer erfindungsgemäßen Ausführungsform eines Fräsaggregats von Figur 1 mit Transmissionsriemen und Riemenrollen,
- Figur 3: eine weitere schematische perspektivische Ansicht der erfindungsgemäßen Ausführungsform eines Fräsaggregats von Figur 1 und 2 mit Transmissionsriemen und Riemenrollen und
- Figur 4: eine schematische axiale Ansicht der erfindungsgemäßen Ausführungsform eines Fräsaggregats der Figuren 1 bis 3 mit Transmissionsriemen und Riemenrollen längs der Fräswalzenachse.

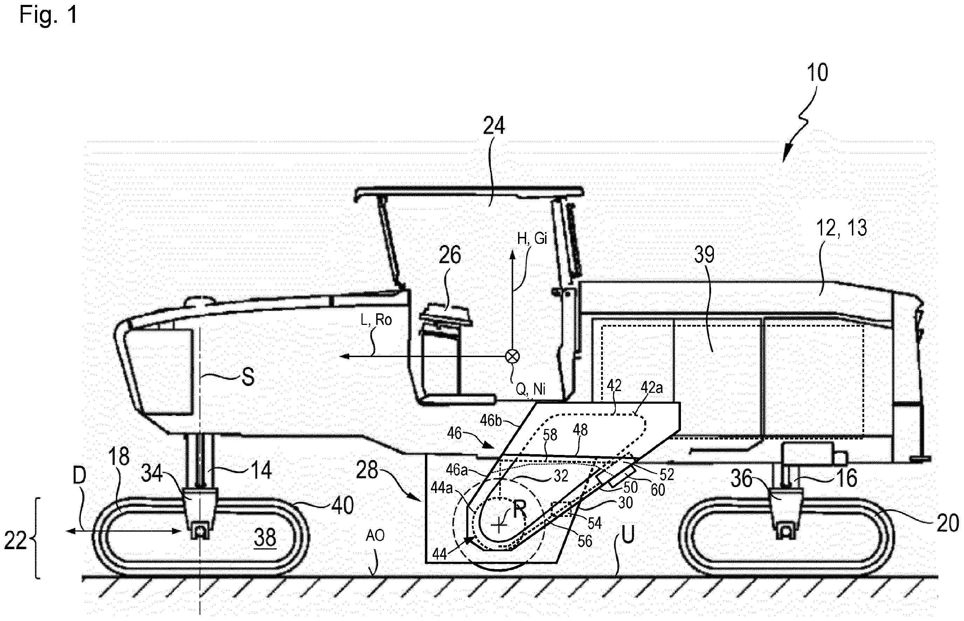

In Figur 1 ist eine erfindungsgemäße Ausführungsform einer Bodenbearbeitungsmaschine in Gestalt einer Boden- oder Straßenfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und die mit dem Maschinenrahmen verbundenen, gegebenenfalls relativ zu diesem beweglichen, Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Die Ansicht von Figur 1 ist eine Ansicht der sogenannten "Maschinenseite" der Bodenbearbeitungsmaschine 10. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal sowohl zur Maschinenlängs- als auch zur Maschinenquerrichtung L bzw. Q. Die Pfeilspitze der Maschinenlängsrichtung L in Figur 1 weist in Vorwärtsrichtung. Die Vorwärtsrichtung ist auch die Arbeits- oder Vorschubrichtung, in welche sich die Bodenbearbeitungsmaschine 10 während eines Fräsbetriebs bewegt. Die Maschinenhöhenrichtung H verläuft parallel zur Gierachse der Maschine 10, die Maschinenlängsrichtung L verläuft parallel zur Rollachse und die Maschinenquerrichtung Q verläuft parallel zur Nickachse Ni.

Die Bodenbearbeitungsmaschine 10 kann einen Fahrstand 24 aufweisen, von dem aus ein Maschinenführer über ein Schaltpult 26 die Maschine 10 steuern kann.

Unter dem Maschinenrahmen 12 ist ein Wechselfräsaggregat 28 angeordnet, mit einer in einem Fräswalzenkasten 30 aufgenommenen Fräswalze 32, die um eine in Maschinenquerrichtung Q verlaufende Fräswalzenachse R rotierbar im Fräswalzenkasten 30 gelagert ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können.

Die Höhenverstellbarkeit des Maschinenrahmens 12 durch die Hubsäulen 14 und 16 dient auch der Einstellung der Frästiefe der Maschine 10 bei der Bodenbearbeitung. Es handelt sich bei der beispielhaft dargestellten Bodenbearbeitungsmaschine 10 um eine Großfräse, für die die Anordnung des Fräsaggregats 28 in Maschinenlängsrichtung L zwischen den vorderen und den hinteren Laufwerken 18 bzw. 20 typisch ist. Derartige Großfräsen oder auch bodenabtragende Maschinen im Allgemeinen weisen üblicherweise ein Transportband auf, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird im dargestellten Ausführungsbeispiel die Fräswalze 32 zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme- und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

Die "Maschinenseite" der Bodenbearbeitungsmaschine 10 ist jene Seite, auf welcher sich der Antrieb der Fräswalze 32 befindet. Ein in Figur 1 lediglich strichliniert angedeuteter Transmissionsriemen 42 übertragt Drehmoment von der Brennkraftmaschine 39 zur Fräswalze 32. Das Drehmoment wird unmittelbar an ein Fräswalzengetriebe 44 übertragen, welches in an sich bekannter Weise, in der Regel als Planetengetriebe, im Fräswalzenkasten 30 aufgenommen ist. Das Fräswalzengetriebe 44 untersetzt die Antriebsdrehzahl der Brennkraftmaschine 39 in eine langsamere Walzendrehzahl der Fräswalze 32 und übersetzt in gleichem Maße das zur Fräswalze 32 übertragene Drehmoment.

Der Transmissionsriemen 42 befindet sich bezüglich der Fräswalzenachse R axial außerhalb des Fräswalzenkastens und ist durch einen Riemenkasten 46 geschützt, welcher den Transmissionsriemen 42 allseits umgibt, um den Transmissionsriemen 42 vor unerwünschten äußeren Einflüssen, wie beispielsweise dem unvermeidlich am Eingriffsort der Fräswalze 32 mit dem Untergrund U entstehenden Schmutz, zu schützen.

Der Riemenkasten 46 ist unterteilt in einen unteren Kastenteil 46a, welcher fester Bestandteil des Fräsaggregats 28 und fest mit dem Fräswalzenkasten 30 verbunden ist, und in einen oberen Kastenteil 46b, welcher fest mit dem Maschinenrahmen 12 verbunden ist. Wenn das Fräsaggregat 28 vom Maschinenrahmen 12 entfernt wird, verbleibt daher der obere Kastenteil 46b am Maschinenrahmen 12, während der untere Kastenteil 46a mit dem Fräsaggregat 28 von der restlichen Bodenbearbeitungsmaschine 10 entfernt wird. Eine Trennfuge 48 zeigt die Grenze zwischen unterem Kastenteil 46a und oberen Kastenteil 46b. Riemenkasten 46 ist in Figur 1 im unteren Teil aufgebrochen dargestellt. Eine unterhalb der Trennfuge 48 verlaufende Strichlinierung zeigt die Grenze zwischen aufgeschnittenem und nicht geschnittenem Teil des Riemenkastens 46 an.

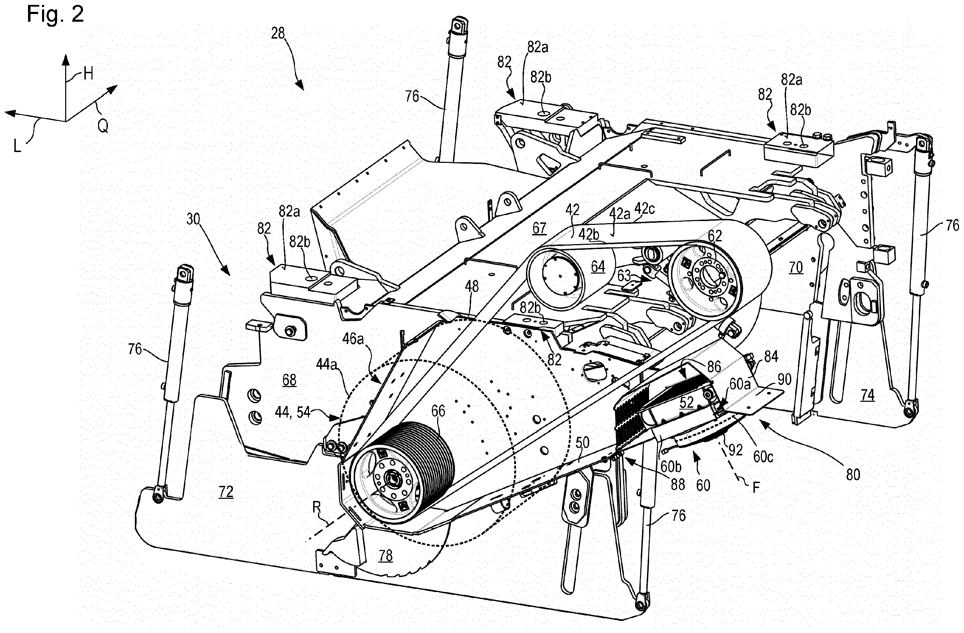

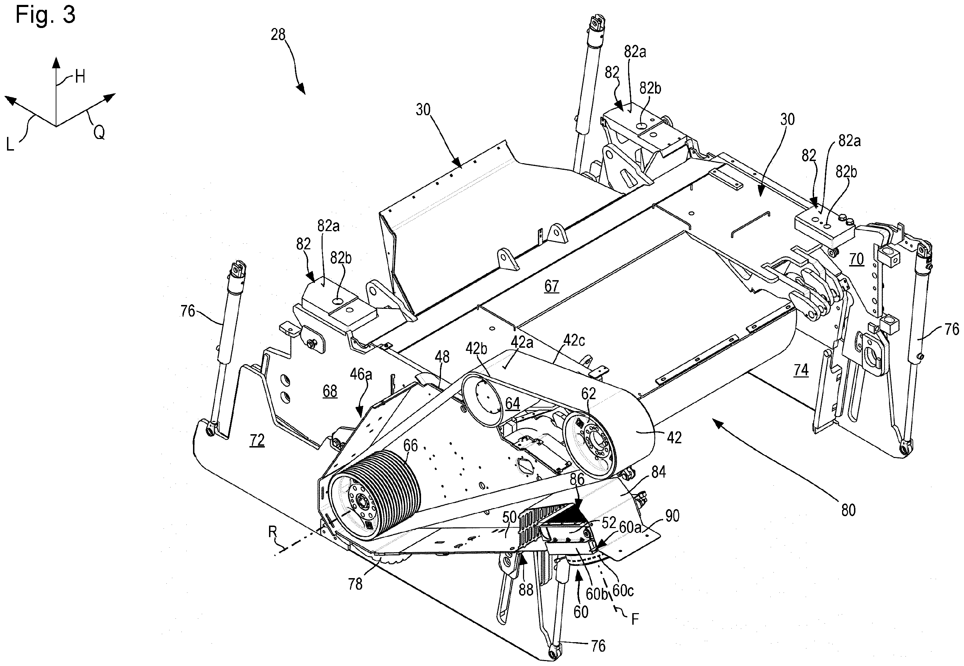

An einer orthogonal zur Zeichenebene von Figur 1 orientierten Wand 50 des unteren Kastenteils 46a, einer ebenfalls zur Zeichenebene von Figur 1 orthogonalen Riemenfläche 42a gegenüberliegend, ist ein Wärmetauscher 52 angeordnet, welcher vom Getriebeöl des Fräswalzengetriebes 44 durchströmt wird. Die Riemenfläche 42a befindet sich in Riemenbreitenrichtung zwischen den beiden Riemenrändern 42b und 42c (s. Figuren 2 und 3). Die Riemenfläche 42a weist dabei von den sie im Umlauf führenden Rollen 62, 64 und 66 weg.

Das Getriebeöl wird durch eine lediglich symbolisch dargestellte Ölpumpe 54 über eine erste Förderleitung 56 vom Fräswalzengetriebe 44 zum Wärmetauscher 52 gefördert, und von dort nach Durchgang durch den Wärmetauscher 52 über eine zweite Förderleitung 58 zurück zum Fräswalzengetriebe 44. Das Fräswalzengetriebe 44, insbesondere das Fräswalzengetriebegehäuse 44a, die erste Förderleitung 56, die Ölpumpe 54, der Wärmetauscher 52 und die zweite Förderleitung 58 bilden einen geschlossenen Getriebeölkreislauf, in welchem das Getriebeöl zirkuliert, wenn die Ölpumpe 54 in Betrieb ist. Die Ölpumpe 54 kann auch im Getriebegehäuse 44a angeordnet sein.

Um das Getriebeöl im Wärmetauscher 52 kühlen zu können, ist am Wärmetauscher 52 ein Kühlerlüfter 60 angeordnet. Der Kühlerlüfter 60 ist beispielsweise elektrisch oder hydraulisch betreibbar und erzeugt einen Luftstrom durch den Wärmetauscher 52 hindurch.

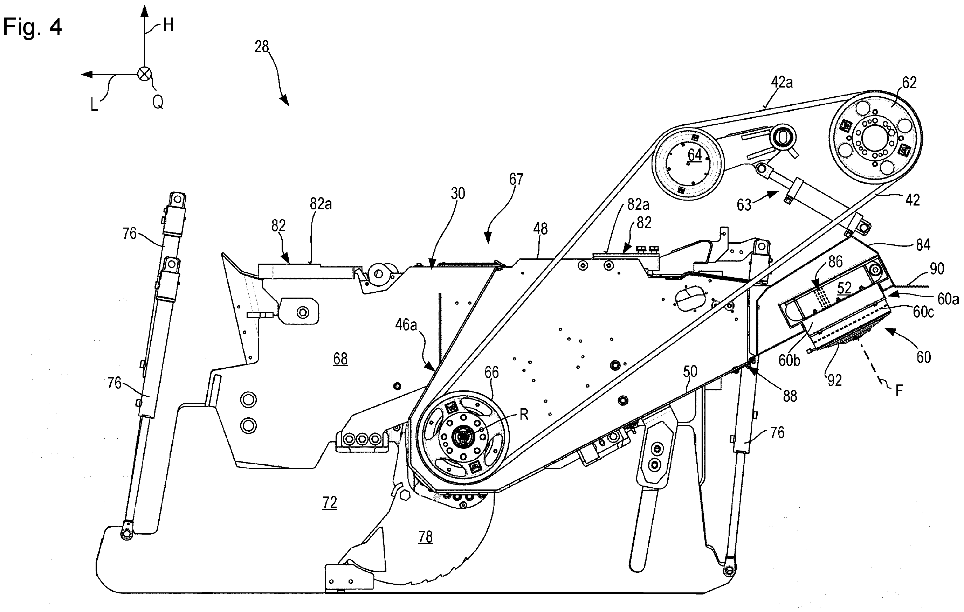

In den Figuren 2 bis 4 ist das Fräsaggregat 28 ohne die übrige Bodenbearbeitungsmaschine 10 dargestellt. Die Figuren 2 und 3 zeigen dabei perspektivische Ansichten von schräg oben, die Figur 4 zeigt eine Seitenansicht längs der Fräswalzenachse R. Die die Rückseite des Fräswalzenkastens 30 üblicherweise bildende, in Höhenrichtung H verlagerbare Abstreifervorrichtung ist in den Figuren nicht dargestellt.

Wie in den Figuren 2 bis 4 dargestellt ist, läuft der Transmissionsriemen 42 um eine brennkraftmaschinenseitige Antriebsrolle 62, um eine durch einen Spannmechanismus 63 verlagerbare Spannrolle 64 und um eine fräswalzenseitige Abtriebsrolle 66 um. Die Antriebsrolle 62, der Spannmechanismus 63 und die Spannrolle 64 sind mit dem Maschinenrahmen 12 der Bodenbearbeitungsmaschine 10 verbunden und sind nicht Teil des Fräsaggregats 28.

Die in Figur 1 lediglich grobschematisch der Vollständigkeit halber symbolisch dargestellte Ölpumpe 54 befindet sich in der Ausführungsform eines Wechselfräsaggregats 28 der Figuren 2 bis 4 im Gehäuse 44a des Fräswalzengetriebes 44 und wird durch die mit der Abtriebsrolle 66 drehfest gekoppelte Eingangswelle des Fräswalzengetriebes 44 angetrieben.

Der Fräswalzenkasten 30 umfasst als Gehäusebauteile eine den Fräswalzenkasten 30 nach oben zum Maschinenrahmen 12 der Bodenbearbeitungsmaschine 10 hin abdeckende Abdeckung 67 sowie an seinen bezüglich der Fräswalzenachse R axialen Stirnseiten je ein oberes Seitenschildteil 68 bzw. 70. An den oberen Seitenschildteilen 68 bzw. 70 sind relativ dazu in Höhenrichtung H beweglich untere Seitenschildteile 72 bzw. 74 angeordnet, welche über hydraulische oder pneumatische Kolben-Zylinder-Anordnungen 76 höhenverstellbar sind. Die Kolben-Zylinder-Anordnungen 76 können auch kraftlos geschaltet werden, um den unteren Seitenschildteilen 72 und 74 zu ermöglichen, schwimmend, d. h. lediglich aufgrund ihrer Gewichtskraft, auf dem Untergrund U aufzuliegen.

In Längsrichtung nach vorne bildet ein in den Figuren 2 bis 4 verdeckter, in Höhenrichtung H verlagerbarer Niederhalter eine die Fräswalze 32 von der Umgebung körperlich trennende Wand des Fräswalzenkastens, in Längsrichtung nach hinten die oben bereits erwähnte Abstreifervorrichtung.

Eine relativ zum unteren Seitenschild 72 beweglich an diesem angeordnete Abdeckscheibe 78 deckt ein im unteren Seitenschild 72 ausgebildetes und von der die Abtriebsrolle 66 tragenden Eingangswelle des Fräswalzengetriebes 44 durchsetztes Langloch abhängig von der durch Höhenverlagerung des Maschinenrahmens 12 eingestellten Frästiefe variabel ab, um einen Austritt von Schmutz aus dem Aufnahme- und Arbeitsraum 80 der Fräswalze 32 während eines Fräsbetriebs zu verhindern.

An der im Fräsbetrieb zum Maschinenrahmen 12 hinweisenden Oberseite des Fräswalzenkastens 30 sind vier Kopplungsbaugruppen 82 angeordnet, welche zur mechanischen Kopplung mit einer entsprechenden Kopplungsgegenbaugruppe am Maschinenrahmen 12 ausgebildet sind. Jede Kopplungsbaugruppe 82 umfasst eine definierte Anlagefläche 82a mit wenigstens einer Durchgangsbohrung 82b. Die Durchgangsbohrungen 82b der Kopplungsbaugruppe 82 werden in fluchtende Anordnung mit entsprechenden Durchgangsbohrungen an der im Wesentlichen gleichartig ausgestalteten Kopplungsgegenbaugruppe des Maschinenrahmens 12 gebracht, woraufhin die fluchtenden Durchgangsbohrungen mit einem nicht dargestellten Schraubbolzen durchsetzt werden. Die Schraubbolzen werden durch Eindrehen in ein Gewinde, sei es das Gewinde einer Mutter oder sei es das Gewinde eines an einer Komponente aus Maschinenrahmen 12 und Fräswalzenkasten 30 feststehenden Bauteils, gegen Lösen gesichert. Der Fräswalzenkasten 30 bzw. das Fräsaggregat 28 ist dann mechanisch ausreichend fest mit dem Maschinenrahmen 12 gekoppelt. Nach einem Anordnen und Spannen des Transmissionsriemens 42 ist die Fräswalze 32 betriebsbereit.

Da das Fräsaggregat 28 einen geschlossenen Getriebeölkreislauf aufweist, muss das Fräsaggregat 28 nach der mechanischen Kopplung mit dem Maschinenrahmen 12 nicht mit einer Getriebeöl- oder Schmierölversorgung der übrigen Bodenbearbeitungsmaschine 10 gekoppelt werden. Doch kann es erforderlich sein, das Fräsaggregat 28 mit einer Hydraulikölquelle oder/und mit einer Stromquelle der übrigen Bodenbearbeitungsmaschine 10 lösbar zu koppeln.

Zwischen dem Wärmetauscher 52 und dem Transmissionsriemen 42, genauer dem zwischen der Antriebsrolle 62 und der Abtriebsrolle 66 auf der der Spannrolle 64 gegenüberliegenden Seite gelegenen Trum des Transmissionsriemens 42, ist ein Schutzblech 84 angeordnet, welches den Wärmetauscher 52 vor unerwünschten mechanischen Einwirkungen von Bauteilen aus dem Riemenkasten 46 schützt, beispielsweise falls ein bewegliches Teil, wie eine Mutter, Schraube oder ein Stein in den Riemenkasten 46 gelangen sollte oder falls sich ein Teil des Transmissionsriemens 42 ablöst. Ein solches bewegliches Teil kann im Riemenkasten 46 eine erhebliche kinetische Energie erfahren, welche ausreichen kann, den Wärmetauscher 52 zu beschädigen. Nicht nur könnte der dann erfolgende Verlust von Getriebeöl zu einer Beschädigung des Fräswalzengetriebes 44 führen. Überdies könnte das austretende Getriebeöl zu einer erheblichen Verschmutzung des Untergrunds U führen. Darüber hinaus kann das Schutzblech 84 den Luftstrom des Kühlerlüfters 60 lenken, und zwar unabhängig davon, ob der Wärmetauscher 52 auf der Saug- oder auf der Druckseite des Kühlerlüfters 60 gelegen ist.

Vom Kühlerlüfter 60 bewegte Luft tritt durch Kanäle 86 im Wesentlichen orthogonal zu der den Wärmetauscher 52 und dem Kühlerlüfter 60 tragenden Wand 50 durch den Wärmetauscher 52 hindurch.

Wie besonders in Figur 4 zu erkennen ist, ist jener Abschnitt des unteren Kastenteils 46a, welcher den Wärmetauscher 52 und den Kühlerlüfter 60 trägt, aus der in den Figuren 2 bis 4 gezeigten betriebsbereiten Stellung um ein Scharnier 88 in Figur 4 im Uhrzeigersinn abklappbar, um für einen Transport des Fräsaggregats 28 dessen Abmessung parallel zur Längsrichtung L verkürzen zu können. Ein Handgriff 90 am Schutzblech 84, welcher gebildet ist durch Abwinkeln eines Längsendes des Schutzblechs 84, erleichtert die manuelle Verstellung des Wärmetauschers 52 und des Kühlerlüfters 60 zwischen ihrer dargestellten betriebsbereiten Stellung und der abgeklappten Transportstellung.

Der Kühlerlüfter 60 umfasst ein Lüftergestell 60a und einen Lüftermotor 60b. Im Lüftergestell 60a läuft ein in den Figuren 2 bis 4 lediglich schematisch angedeutetes Lüfterblatt 60c, angetrieben durch den Lüftermotor 60b um eine Lüfterachse F um und bewegt dadurch Luft längs der Lüfterachse F. Die vom Kühlerlüfter 60 angetriebene Luft wird der Umgebungsatmosphäre "entnommen" und nach Durchgang durch den Kühlerlüfter 60 und den Wärmetauscher 52 an anderer Stelle in die Umgebungsatmosphäre zurückgegeben. Es gibt keinen geschlossenen Luftkreislauf. Jenseits von Kühlerlüfter 60 und Wärmetauscher 52 strömt die angetriebene Luft im freien Strahl.

Auf seiner vom Wärmetauscher abgewandten Seite kann das Lüftergestell 60a durch einen Gitterschutz 92 gegen den Eintritt von Steinen und dergleichen geschützt sein. Zusätzlich zum Gitterschutz 92 kann ein auch feinere Partikel filternder Luftfilter vorgesehen sein, um ein Zusetzen der längs der Lüfterachse F verlaufenden feinen Kühlluft-Kanäle 86 durch von der Kühlluft mitgeführte, gegebenenfalls feuchte, Staubpartikel zu vermeiden. Dies gilt vor allem dann, wenn der Wärmetauscher 52 auf der Druckseite des Kühlerlüfters 60 gelegen ist.

## Patentansprüche

1. Fräsaggregat (28) für eine Bodenbearbeitungsmaschine (10), umfassend eine Fräswalze (32) und einen die Fräswalze (32) um eine Fräswalzenachse (R) drehbar lagernden Fräswalzenkasten (30), wobei der Fräswalzenkasten (30) die Fräswalze (32) von mehreren Seiten umgibt, wobei das Fräsaggregat (28) einen geschlossenen Betriebsmittelkreislauf (44a, 52, 54, 56, 58) aufweist, welcher eine Betriebsmittelpumpe (54) umfasst, die dazu ausgebildet ist, das Betriebsmittel zur Zirkulation im Betriebsmittelkreislauf (44a, 52, 54, 56, 58) anzutreiben, wobei der Betriebsmittelkreislauf (44a, 52, 54, 56, 58) einen während einer Zirkulationsströmung des Betriebsmittels vom Betriebsmittel durchströmten Wärmetauscher (52) umfasst, wobei der Wärmetauscher (52) am Fräswalzenkasten (30) angeordnet ist,
**dadurch gekennzeichnet, dass** der Wärmetauscher (52) zur Anströmung in einem offenen Kühlgasstrom durch ein vom Betriebsmittel gesondertes Kühlgas ausgebildet ist.

2. Fräsaggregat (28) nach Anspruch 1,
**dadurch gekennzeichnet, dass** am Fräswalzenkasten (30) ein Kühlerlüfter (60) angeordnet ist, welcher dazu ausgebildet ist, das Kühlgas zur Anströmung des Wärmetauschers (52) anzutreiben.

3. Fräsaggregat (28) nach Anspruch 1 oder 2,
**dadurch gekennzeichnet, dass** der Wärmetauscher (52) oder/und ein ein Lüfterblatt (60c) rotierbar lagerndes Lüftergestell (60a) des Kühlerlüfters (60) relativ zum Fräswalzenkasten (30) beweglich am Fräswalzenkasten (30) angeordnet ist bzw. sind.

4. Fräsaggregat (28) nach einem der vorhergehenden Ansprüche,
**dadurch gekennzeichnet, dass** der Wärmetauscher (52) und der Kühlerlüfter (60) als gemeinsam vormontierte Baugruppe ausgebildet sind.

5. Fräsaggregat (28) nach einem der vorhergehenden Ansprüche,
**dadurch gekennzeichnet, dass** der Wärmetauscher (52) ein Kreuzstrom-Wärmetauscher (52) oder/und ein Gegenstrom-Wärmetauscher oder/und ein Gleichstrom-Wärmetauscher ist und vom Kühlgas durchströmbare Kühlgas-Kanäle (86) aufweist.

6. Fräsaggregat (28) nach einem der vorhergehenden Ansprüche,
**dadurch gekennzeichnet, dass** der Wärmetauscher (52) oder/und der Kühlerlüfter (60) auf der von der Fräswalze (32) abgewandten Seite des Fräswalzenkastens (30) angeordnet ist bzw. sind.

7. Fräsaggregat (28) nach Anspruch 6,
**dadurch gekennzeichnet, dass** der Wärmetauscher (52) oder/und der Kühlerlüfter (60) bezogen auf die Fräswalzenachse (R) axial weiter von der Fräswalze (32) entfernt angeordnet ist bzw. sind als eine den Fräswalzenkasten (30) axial begrenzende Seitenwand (68, 72) des Fräswalzenkastens (30).

8. Fräsaggregat (28) nach einem der vorhergehenden Ansprüche,
**dadurch gekennzeichnet, dass** am Fräswalzenkasten (30) wenigstens ein Teil (46a) eines Vorrichtungsgehäuses (46) angeordnet ist, in welchem im fräsbereiten Zustand des Fräsaggregats (28) eine von der Fräswalze (32) verschiedene Vorrichtung (42) aufgenommen ist, wobei der Wärmetauscher (52) oder/und der Kühlerlüfter (60) an oder in einer Wand (50) des Vorrichtungsgehäuses (46) angeordnet ist.

9. Fräsaggregat (28) nach Anspruch 8,
**dadurch gekennzeichnet, dass** das Vorrichtungsgehäuse (46) ein Transmissionsgehäuse (46) ist, in welchem im fräsbereiten Zustand des Fräsaggregats (28) eine Transmissionsvorrichtung (42, 62, 64, 66) angeordnet ist, welche Antriebsdrehmoment zur Fräswalze (32) überträgt.

10. Fräsaggregat (28) nach Anspruch 9,
**dadurch gekennzeichnet, dass** die Transmissionsvorrichtung (42, 62, 64, 66) einen Transmissionsriemen (42) aufweist.

11. Fräsaggregat (28) nach Anspruch 10,
**dadurch gekennzeichnet, dass** der Wärmetauscher (52) oder/und der Kühlerlüfter (60) an einer Wand (50) des Vorrichtungsgehäuses (46) angeordnet ist bzw. sind, welche einer zwischen den äußeren Rändern (42b, 42c) des Transmissionsriemens (42) gelegenen umlaufenden Riemenfläche (42a) gegenüberliegt.

12. Fräsaggregat (28) nach einem der vorhergehenden Ansprüche,
**dadurch gekennzeichnet, dass** das Betriebsmittel ein Getriebeöl eines im Fräsaggregat (28) im Übertragungspfad des Antriebsdrehmoments zur Fräswalze (32) angeordneten Fräswalzengetriebes (44) ist.

13. Fräsaggregat (28) nach einem der vorhergehenden Ansprüche,
**dadurch gekennzeichnet, dass** es eine mechanische Kopplungsbaugruppe (82) zur wiederholt lösbaren mechanischen Kopplung mit einer Kopplungsgegenbaugruppe an einem Maschinenrahmen (12) einer Bodenbearbeitungsmaschine (10) aufweist.

14. Bodenbearbeitungsmaschine (10) mit einem Fräsaggregat (28) nach Anspruch 1,
**dadurch gekennzeichnet, dass** die Bodenbearbeitungsmaschine (10) einen Kühlerlüfter (60) aufweist, welcher von einem Maschinenrahmen (12) der Bodenbearbeitungsmaschine (10) derart getragen ist, dass der Kühlerlüfter (60) beim Entfernen des Fräsaggregats (28) vom Maschinenrahmen (12) am Maschinenrahmen (12) verbleibt.

15. Bodenbearbeitungsmaschine (10) mit einem Fräsaggregat (28) nach einem der Ansprüche 2 bis 13.

## Claims

1. A milling unit (28) for an earth working machine (10), encompassing a milling drum (32) and a milling drum housing (30) supporting the milling drum (32) rotatably around a milling drum axis (R); the milling drum housing (30) surrounding the milling drum (32) on several sides; the milling unit (28) comprising a closed operating-medium circuit (44a, 52, 54, 56, 58) that encompasses an operating-medium pump (54) that is embodied to drive the operating medium to circulate in the operating-medium circuit (44a, 52, 54, 56, 58); the operating-medium circuit (44a, 52, 54, 56, 58) encompassing a heat exchanger (52) through which operating medium flows during circulating flow of the operating medium; the heat exchanger (52) being arranged on the milling drum housing (30),
**characterized in that** the heat exchanger (52) is embodied for inflow by a cooling gas, separate from the operating medium, in an open cooling-gas flow.

2. The milling unit (28) according to Claim 1,
**characterized in that** a cooling fan (60), which is embodied to drive the cooling gas for inflow onto the heat exchanger (52), is arranged on the milling drum housing (30).

3. The milling unit (28) according to Claim 1 or 2,
**characterized in that** the heat exchanger (52), and/or a fan frame (60a) of the cooling fan (60) which rotatably supports a fan blade (60c), is/are arranged on the milling drum housing (30) movably relative to the milling drum housing (30).

4. The milling unit (28) according to one of the preceding claims,
**characterized in that** the heat exchanger (52) and the cooling fan (60) are embodied as a collectively preassembled subassembly.

5. The milling unit (28) according to one of the preceding claims,
**characterized in that** the heat exchanger (52) is a cross-flow heat exchanger (52) and/or a counterflow heat exchanger and/or a parallel-flow heat exchanger, and comprises cooling-gas conduits (86) that are flowthroughcapable for the cooling gas.

6. The milling unit (28) according to one of the preceding claims,
**characterized in that** the heat exchanger (52) and/or the cooling fan (60) is/are arranged on that side of the milling drum housing (30) which faces away from the milling drum (32).

7. The milling unit (28) according to Claim 6,
**characterized in that** the heat exchanger (52) and/or the cooling fan (60) is/are arranged axially farther from the milling drum (32), with respect to the milling drum axis (R), than a side wall (68, 72) of the milling drum housing (30) which axially delimits the milling drum housing (30).

8. The milling unit (28) according to one of the preceding claims,
**characterized in that** at least a part (46a) of an apparatus housing (46), in which an apparatus (42) different from the milling drum (32) is received when the milling unit (28) is in the milling-ready state, is arranged on the milling drum housing (30); the heat exchanger (52) and/or the cooling fan (60) being arranged on or in a wall (50) of the apparatus housing (46).

9. The milling unit (28) according to Claim 8,
**characterized in that** the apparatus housing (46) is a transmission housing (46) in which, when the milling unit (28) is in the milling-ready state, a transmission apparatus (42, 62, 64, 66) that transfers a drive torque to the milling drum (32) is arranged.

10. The milling unit (28) according to Claim 9,
**characterized in that** the transmission apparatus (42, 62, 64, 66) comprises a transmission belt (42).

11. The milling unit (28) according to Claim 10,
**characterized in that** the heat exchanger (52) and/or the cooling fan (60) is/are arranged on a wall (50) of the apparatus housing (46) which is located opposite a recirculating belt surface (42a) located between the outer edges (42b, 42c) of the transmission belt (42).

12. The milling unit (28) according to one of the preceding claims,
**characterized in that** the operating medium is a transmission oil of a milling drum transmission (44) arranged in the milling unit (28) in the transfer path of drive torque to the milling drum (32).

13. The milling unit (28) according to one of the preceding claims,
**characterized in that** it comprises a mechanical coupling subassembly (82) for repeatedly releasable mechanical coupling to a counterpart coupling subassembly on a machine frame (12) of an earth working machine (10).

14. An earth working machine (10) having a milling unit (28) according to Claim 1,
**characterized in that** the earth working machine (10) comprises a cooling fan (60) that is carried by a machine frame (12) of the earth working machine (10) in such a way that the cooling fan (60) remains on the machine frame (12) upon removal of the milling unit (28) from the machine frame (12).

15. An earth working machine (10) having a milling unit (28) according to Claims 2 to 13.

## Revendications

1. Unité de fraisage (28) pour une machine de traitement du sol (10), comprenant un tambour de fraisage (32) et un boîtier de tambour de fraisage (30) supportant de manière rotative le tambour de fraisage (32) autour d'un axe de tambour de fraisage (R), dans lequel le boîtier de tambour de fraisage (30) entoure le tambour de fraisage (32) de plusieurs côtés, dans lequel l'unité de fraisage (28) présente un circuit fermé de fluide de travail (44a, 52, 54, 56, 58) qui comprend une pompe de fluide de travail (54), qui est conçu pour entraîner le fluide de travail pour la circulation dans le circuit de fluide de travail (44a, 52, 54, 56, 58), le circuit de fluide de travail (44a, 52, 54, 56, 58) comprenant un échangeur de chaleur (52) à travers lequel le fluide de travail s'écoule pendant un écoulement de circulation du fluide de travail, l'échangeur de chaleur (52) étant agencé sur le boîtier de tambour de fraisage (30), **caractérisé en ce que** l'échangeur de chaleur (52) est conçu pour être parcouru dans un courant de gaz de refroidissement ouvert par un gaz de refroidissement séparé du moyen d'actionnement.

2. Unité de fraisage (28) selon la revendication 1,
**caractérisé en ce qu'un** ventilateur de refroidissement (60) est disposé sur le boîtier de tambour de fraisage (30), lequel ventilateur est conçu pour amener le gaz de refroidissement à s'écouler vers l'échangeur de chaleur (52).

3. Unité de fraisage (28) selon la revendication 1 ou 2,
**caractérisée en ce que** l'échangeur de chaleur (52) ou/et un cadre de ventilateur (60a) du ventilateur de refroidissement (60) supportant de manière rotative une pale de ventilateur (60c) est/sont disposés de manière mobile sur le boîtier de tambour de fraisage (30) par rapport au boîtier de tambour de fraisage (30).

4. Unité de fraisage (28) selon l'une des revendications précédentes,
**caractérisée en ce que** l'échangeur de chaleur (52) et le ventilateur de refroidissement (60) sont conçus comme un ensemble préassemblé conjointement.

5. Unité de fraisage (28) selon l'une des revendications précédentes,
**caractérisée en ce que** l'échangeur de chaleur (52) est un échangeur de chaleur à courant croisé (52) ou/et un échangeur de chaleur à contre-courant ou/et un échangeur de chaleur à courant parallèle et présente des canaux de gaz de refroidissement (86) à travers lesquels le gaz de refroidissement peut circuler.

6. Unité de fraisage (28) selon l'une des revendications précédentes,
**caractérisée en ce que** l'échangeur de chaleur (52) ou/et le ventilateur de refroidissement (60) est/sont disposé(s) sur le côté du boîtier de tambour de fraisage (30) opposé au tambour de fraisage (32).

7. Unité de fraisage (28) selon la revendication 6,
**caractérisée en ce que** l'échangeur de chaleur (52) ou/et le ventilateur de refroidissement (60) est/sont disposé(s) axialement plus loin du tambour de fraisage (32) par rapport à l'axe (R) du tambour de fraisage qu'une paroi latérale (68, 72) du boîtier de tambour de fraisage (30) délimitant axialement le boîtier de tambour de fraisage (30).

8. Unité de fraisage (28) selon l'une des revendications précédentes,
**caractérisée en ce qu'au** moins une partie (46a) d'un boîtier de dispositif (46) est disposée sur le boîtier de tambour de fraisage (30), dans lequel, à l'état prêt au fraisage de l'unité de fraisage (28), un dispositif (42) différent du tambour de fraisage (32) est logé, l'échangeur de chaleur (52) et/ou le ventilateur de refroidissement (60) étant disposé sur ou dans une paroi (50) du boîtier de dispositif (46).

9. Unité de fraisage (28) selon la revendication 8,
**caractérisée en ce que** le boîtier de dispositif (46) est un boîtier de transmission (46) dans lequel est disposé, dans l'état prêt au fraisage de l'unité de fraisage (28), un dispositif de transmission (42, 62, 64, 66) qui transmet le couple d'entraînement au tambour de fraisage (32).

10. Unité de fraisage (28) selon la revendication 9,
**caractérisée en ce que** le dispositif de transmission (42, 62, 64, 66) comprend une courroie de transmission (42).

11. Unité de fraisage (28) selon la revendication 10,
**caractérisée en ce que** l'échangeur de chaleur (52) ou/et le ventilateur de refroidissement (60) est/sont disposé(s) sur une paroi (50) du boîtier de dispositif (46) qui fait face à une surface de courroie circonférentielle (42a) située entre les bords extérieurs (42b, 420) de la courroie de transmission (42).

12. Unité de fraisage (28) selon l'une des revendications précédentes,
**caractérisée en ce que** le moyen d'actionnement est une huile d'engrenage d'un engrenage de tambour de fraisage (44) disposé dans l'unité de fraisage (28) sur le trajet de transmission du couple d'entraînement au tambour de fraisage (32).

13. Unité de fraisage (28) selon l'une des revendications précédentes,
**caractérisée en ce qu'**elle comprend un ensemble d'accouplement mécanique (82) pour un accouplement mécanique répété avec un contre-ensemble d'accouplement sur un châssis de machine (12) d'une machine de traitement du sol (10).

14. Machine de traitement du sol (10) avec une unité de fraisage (28) selon la revendication 1,
**caractérisée en ce que** la machine de traitement du sol (10) comprend un ventilateur de refroidissement (60) supporté par un châssis de machine (12) de la machine de traitement du sol (10) de sorte que le ventilateur de refroidissement (60) reste sur le châssis de machine (12) lorsque l'unité de fraisage (28) est retirée du châssis de machine (12).

15. Machine de traitement du sol (10) comprenant une unité de fraisage (28) selon l'une des revendications 2 à 13.
